# FASCICULE DE BREVET EUROPEEN

(11) **EP 0 835 396 B1**
(45) Date de publication et mention de la délivrance du brevet: **06.06.2001**
(21) Numéro de dépôt: 97916505.7
(22) Date de dépôt: 26.03.1997
(51) Int. Cl.: F16D 13/71

(54) **MECANISME D'EMBRAYAGE, A CROCHETS DE RAPPEL ET MODULE D'EMBRAYAGE COMPORTANT UN TEL MECANISME**
KUPPLUNGSMECHANISMUS MIT MITNEHMERHAKEN UND KUPPLUNGSEINHEIT MIT EINEM SOLCHEN MECHANISMUS
CLUTCH MECHANISM WITH RESILIENT HOOK MEMBERS, AND CLUTCH MODULE COMPRISING SAME

(30) Priorité: 27.03.1996 FR 9603800
(43) Date de publication de la demande: 15.04.1998
(73) Titulaire: VALEO, 75017 Paris (FR)
(72) Inventeur: GRATON, Michel, F-75020 Paris (FR); GIROIRE, Jean-Pierre, F-78100 Saint-Germain-en-Laye (FR)
(74) Mandataire: Gamonal, Didier
(86) Numéro de dépôt international: FR9700538
(87) Numéro de publication internationale: WO9736113

(56) Documents cités:
- DE-A- 2 205 455
- FR-A- 1 294 170
- FR-A- 2 155 386
- FR-A- 2 712 361
- FR-A- 2 718 206
- US-A- 3 499 512

## Description

La présente invention concerne les embrayages à diaphragme, notamment pour véhicules automobiles.

Elle se rapporte également aux mécanismes d'embrayages et aux modules d'embrayages.

Ainsi qu'on le sait, un embrayage comporte un ensemble de pièces annulaires coaxiales, dont certaines sont assemblées par avance pour former un ensemble unitaire, dit mécanisme d'embrayage, propre à être fixé par son couvercle sur le plateau de réaction de l'embrayage destiné à être solidarisé en rotation à un arbre menant.

Le plateau de réaction présente dorsalement une face de friction pour un disque de friction adapté à être serré entre le plateau de réaction et un plateau de pression appartenant au mécanisme d'embrayage.

Le mécanisme d'embrayage, comme décrit dans le document FR-A-2 718 206, comporte (figure 1), outre le couvercle 8 et le plateau de pression 6, un diaphragme 7 prenant appui en 90 sur le fond du couvercle 8 pour action en 61 sur le plateau de pression 6 afin de serrer le disque de friction entre les plateaux de pression et de réaction.

Des moyens d'attelage 10 permettent de lier en rotation - avec mobilité axiale - le plateau de pression 6 au couvercle 8.

Ces moyens 10 consistent le plus souvent en des languettes élastiques fixées à l'une de leurs extrémités au couvercle et à leur autre extrémité à une patte saillante radialement du plateau de pression. La fixation est réalisée à l'aide d'organes de fixation 12 sous forme de rivets, vis, boulons, etc...

Les organes 12 servent également chacun à fixer un crochet élastique de rappel 9 au plateau de pression 6, dans ce mode de réalisation, en même temps que les languettes 10.

Chaque crochet 9 présente, pour appui de la tête des organes 12, une semelle 92, pour fixation du crochet 9 au plateau de pression 6 au contact de la languette 10, et une partie sinueuse 93 contournant le diaphragme à sa périphérie externe et présentant, pour ce faire, une partie de contournement du diaphragme prolongée par une partie inclinée dotée, à son extrémité libre, d'un bourrelet pour serrage élastique (pincement) du diaphragme 7 entre ledit bourrelet et un bossage 61 que présente la face dorsale du plateau de pression 6 pour appui du diaphragme 7 attelé ainsi à sa périphérie externe au plateau de pression 6.

Lors du désengagement de l'embrayage on libère ainsi, de manière certaine, le disque de friction.

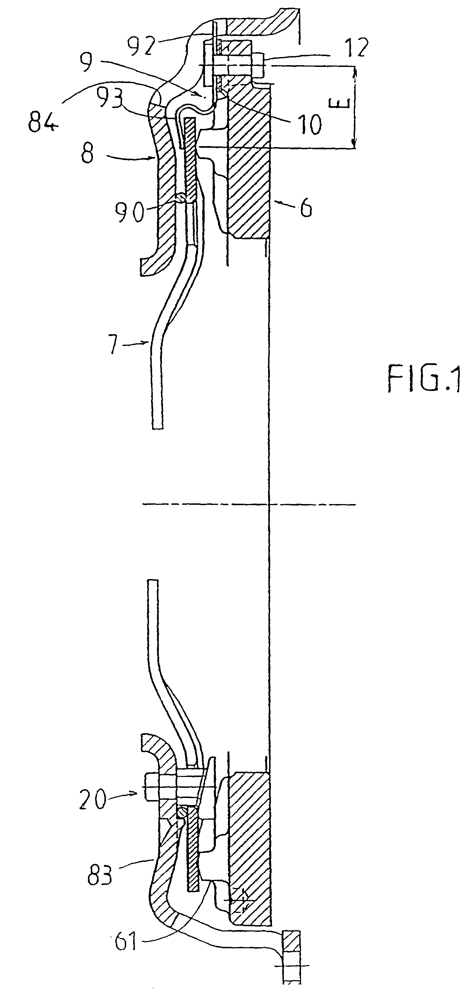

On voit clairement, à la figure 1, que la distance radiale E séparant le sommet du bossage 61 et l'axe d'implantation de l'organe de fixation 12 dans le plateau de pression est relativement grande.

L'invention a pour objet de diminuer, de manière simple et économique, cette distance radiale.

Suivant l'invention, un mécanisme d'embrayage du type sus-indiqué dans lequel la partie de contournement du diaphragme comporte une portion sommitale surplombant le diaphragme, est caractérisé en ce que ladite portion sommitale est entaillée pour formation d'un passage pour la tête de l'organe de fixation.

Ainsi, de manière simple et économique, on réduit la distance radiale E précitée.

Pour un même diamètre d'appui du diaphragme sur le plateau de pression on peut donc monter les organes de fixation radialement plus vers l'intérieur, ce qui permet, dans certains cas, de supprimer les pattes radiales précitées du plateau de pression servant à la fixation des languettes.

Le plateau de pression est alors simplifié, plus économique, plus facile à équilibrer dynamiquement et plus robuste.

En variante, pour un même diamètre d'implantation des organes de fixation, on peut augmenter le diamètre de l'appui qu'offre le plateau de pression au diaphragme. On peut ainsi transmettre plus de couple.

Bien entendu on peut jouer sur les deux paramètres (diamètre d'implantation des organes de fixation - diamètre d'appui du diaphragme).

Grâce à l'invention, on peut diminuer la longueur de la partie sinueuse du crochet de rappel et rendre celui-ci plus économique, sachant que ledit crochet est traité pour avoir la dureté voulue et l'élasticité voulue. Le plateau de pression - et donc l'embrayage - est moins encombrant radialement.

La fixation au plateau de pression de l'organe de fixation du crochet se fait de manière simple, axialement, par traversée de l'entaille par la tête de l'organe de fixation.

Selon une autre caractéristique de l'invention, la partie de contournement se raccorde à une partie de raccordement ayant en section une forme circulaire s'étendant globalement sur 180° et se raccordant elle-même à la semelle du crochet.

Cela permet de réduire encore la distance radiale entre l'axe d'implantation de l'organe de fixation et l'appui du plateau de pression.

Dans ce cas, la partie de contournement a, en section, une forme circulaire s'étendant également globalement sur 180°. Cette partie se raccorde à un bourrelet pour appui sur le diaphragme en vis-à-vis de l'appui du plateau de pression et serrage élastique dudit diaphragme entre le bourrelet et l'appui.

Avantageusement la partie sommitale de la partie de contournement est élargie, en sorte qu'elle est résistante malgré la formation de l'entaille selon l'invention.

Cette portion sommitale- est plus large que la partie de raccordement.

En outre, en augmentant la largeur de cette portion sommitale, on peut rogner la partie basse de l'organe de fixation pour diminuer encore la distance radiale précitée entre l'appui et l'implantation des organes de fixation.

La solution, selon l'invention, se marie bien avec une disposition dans laquelle la périphérie externe en forme de jupe du couvercle est fixée au plateau de réaction, par exemple par soudage, sertissage, rabattement de pattes vers l'intérieur ou autre.

Dans ce cas les garnitures de friction du disque de friction de l'embrayage peuvent venir au plus près de la jupe du couvercle tout en ayant des organes de fixation des crochets implantés, grâce à l'invention, au niveau de la face de friction du plateau de réaction.

L'embrayage est alors très compact radialement avec possibilité de former un module d'embrayage se montant directement sur l'arbre menant (le vilebrequin du moteur à combustion interne dans le cas d'une application pour véhicule automobile).

La description qui va suivre illustre l'invention en regard des dessins annexés dans lesquels :
- la figure 1 est une vue en coupe axiale d'un mécanisme d'embrayage de l'art antérieur ;
- la figure 2 est une vue en coupe axiale d'un embrayage selon l'invention ;
- la figure 3 est une vue partielle selon la flèche 3 de la figure 2 ;
- les figures 4 à 6 sont des vues en perspective du croche de rappel.

Dans ces figures les éléments communs à l'invention et à l'art antérieur seront affectés des mêmes signes de références.

Ainsi qu'on le sait, un embrayage à diaphragme forme un organe de coupure et de démarrage intercalé entre un arbre menant 1 et un arbre mené 2.

Cet embrayage comporte un ensemble de pièces annulaires, à savoir un disque de friction 5, un plateau de réaction 3,4, un plateau de pression 6, un diaphragme 7 et un couvercle 8.

Normalement l'embrayage et engagé, en sorte que les garnitures de friction 51, que comporte le disque de friction 5 à sa périphérie externe, sont serrées entre les plateaux de réaction 3,4 et de pression 6 sous l'action du diaphragme 7 prenant appui (en 90) sur le couvercle 8 pour action (en 61) sur le plateau de pression 6 (sur la face dorsale de celui-ci). Le couple est ainsi transmis de l'arbre menant 1 à l'arbre mené 2 via le disque de friction 5 comportant pour ce faire, centralement, un moyeu 131 cannelé intérieurement pour sa liaison en rotation à l'arbre mené 2.

Pour désengager l'embrayage il faut agir, à l'aide d'une butée de débrayage 80, sur l'extrémité interne du diaphragme 7 pour faire pivoter celui-ci afin d'annuler la charge qu'il exerce sur le plateau de pression 6 pour libérer les garnitures de friction 51.

Le couple n'est alors plus transmis de l'arbre menant 1 à l'arbre mené 2.

D'une manière générale, le plateau de réaction 3,4 est destiné à être fixé à l'arbre menant 1 et comporte centralement des trous pour passage d'organes d'assemblage 11 (usuellement des vis, en variante des boulons) du plateau de réaction 3,4 à l'arbre menant 1.

Ce plateau 3,4 peut être monobloc, en variante il peut être en deux parties.

Ces deux parties peuvent être accouplées de manière élastique entre elles. Le plateau de réaction, appelé également volant, comporte alors deux masses coaxiales montées mobiles angulairement l'une par rapport à l'autre à l'encontre de moyens élastiques. L'une des masses-est destinée à être fixée à l'arbre menant 1 par les organes d'assemblage 11, tandis que l'autre masse forme le plateau de réaction proprement dit de l'embrayage en étant montée de manière tourillonnante par l'intermédiaire de moyens de palier, usuellement un roulement à billes, sur la première masse. Les moyens élastiques peuvent consister en des ressorts courbes agissant circonférentiellement entre les deux masses, en variante en des ressorts agissant globalement radialement pour la position de repos du plateau de réaction, ce qui permet, dans tous les cas, de filtrer les vibrations. Dans ce type de construction, les garnitures de friction 51 du disque de friction 5, appelé également friction d'embrayage, sont le plus souvent accouplées de manière rigide au moyeu 131 présentant, par exemple, d'un seul tenant, à sa périphérie externe, un voile sur lequel est fixé un disque de support pour les garnitures 51.

De manière connue, le plateau de pression 6, le diaphragme 7 et le couvercle 8 forment un ensemble unitaire appelé mécanisme d'embrayage (voir figure 1) et des moyens d'attelage 10 interviennent entre le plateau de pression 6 et le couvercle 8. Ces moyens 10 permettent de lier en rotation le plateau de pression 6 au couvercle 8 tout en autorisant un mouvement axial du plateau de pression 6 par rapport au couvercle 8.

Ces moyens peuvent consister, d'une part, en des pattes d'orientation radiale - formant tenons - s'étendant en saillie radiale à la périphérie externe du plateau de pression 6 et, d'autre part, en des rainures axiales - formant mortaises - ménagées dans une jupe cylindrique globalement d'orientation axiale que présente le couvercle 8 à sa périphérie externe.

Il est ainsi formé une liaison du type tenons-mortaises.

Ici ces moyens d'attelage consistent en des languettes élastiques 10, d'orientation tangentielle, fixées par des organes de fixation 12 à l'une de leurs extrémités au plateau de pression 6 et à leur autre extrémité au couvercle 8.

Les organes de fixation 12 peuvent consister en des vis, des boulons. Usuellement ils consistent en des rivets 12.

Par ailleurs, le plateau de pression 6 porte, de place en place, des crochets de rappel 9, décrits ci-après, pour atteler le diaphragme 7 au plateau de pression 6, ici par pincement de la périphérie externe du diaphragme 7 entre ledit crochet et un bossage d'appui 61, décrit ci-après, du plateau de pression 6.

Des moyens de fixation 13 sont prévus pour fixer le couvercle 8 (et donc le mécanisme d'embrayage) au plateau de réaction 3,4.

Ces moyens peuvent consister en des vis, le couvercle 8, comme décrit dans le document FR-A-2 718 206 précité étant fixé par son rebord radial sur le plateau de réaction.

Dans l'exemple de réalisation décrit, l'embrayage est un embrayage pour véhicule automobile sous forme d'un module d'embrayage - formant un ensemble unitaire - rapporté par son plateau de réaction 3,4 sur le vilebrequin 1 - formant l'arbre menant du moteur à combustion interne.

L'arbre mené 2 consiste en l'arbre d'entrée de la boîte de vitesses, la butée de débrayage 80 étant mobile axialement le long d'un tube guide 81 - appelé trompette de débrayage - fixé sur le carter de la boîte de vitesses et entourant l'arbre d'entrée 2. Cette butée 80 est propre à être actionnée par une fourchette de débrayage 82 permettant de déplacer l'organe de manoeuvre de la butée 80 le long du tube 81 pour action sur l'extrémité interne des doigts du diaphragme 7 et désengagement de l'embrayage.

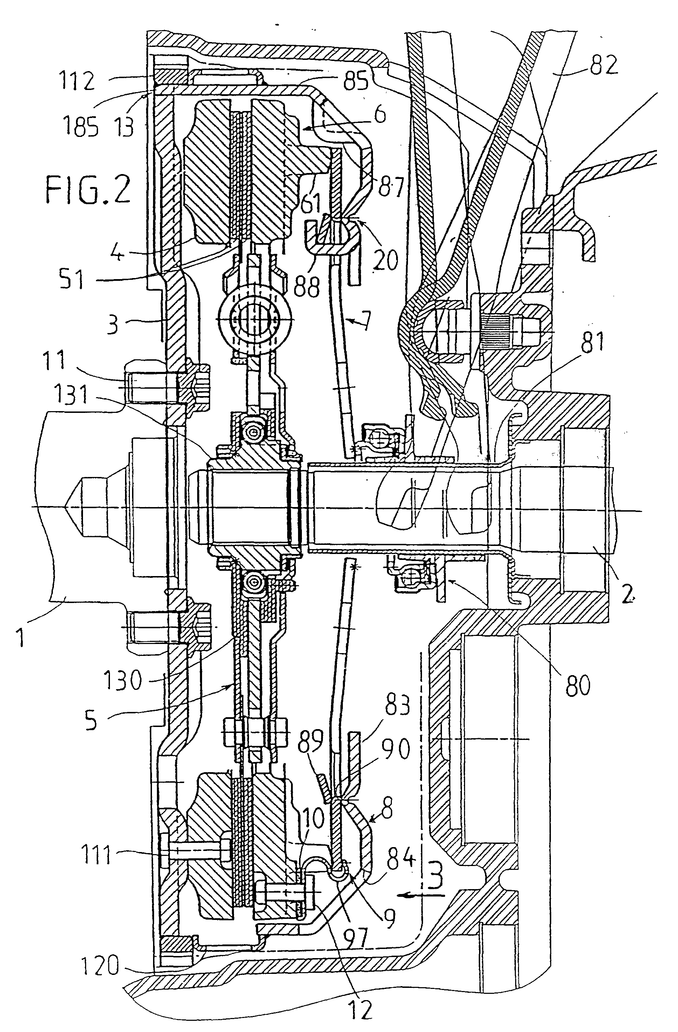

Ainsi, à la figure 2, on a représenté la fourchette 82 dans différentes positions.

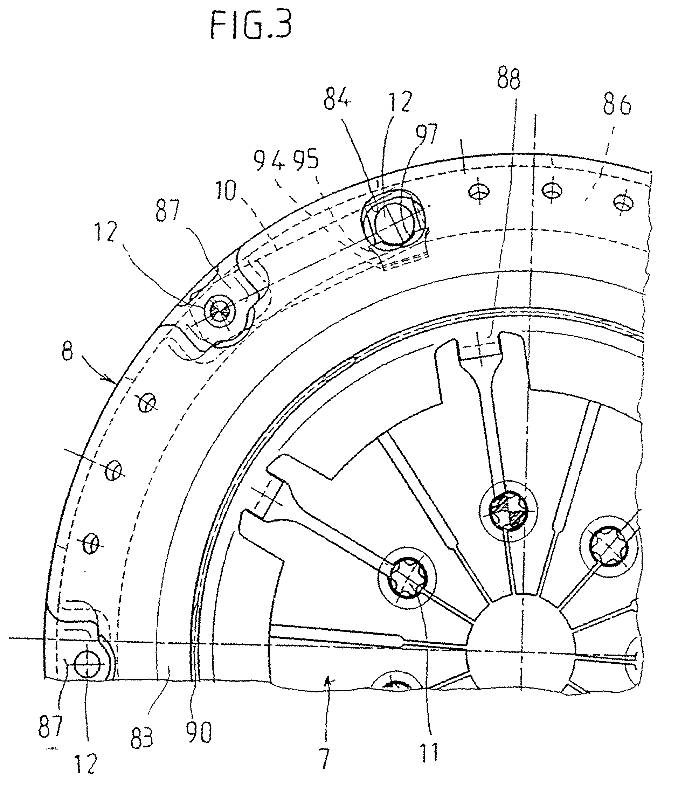

De manière connue, le diaphragme 7 comporte une partie périphérique formant rondelle Belleville et une partie centrale fragmentée en doigts radiaux par des fentes (figure 3) débouchant à l'une de leurs extrémités dans l'ouverture centrale du diaphragme 7, traversée par l'arbre mené 2, et à leur autre extrémité dans des orifices élargis (voir figure 3) délimitant la périphérie interne de la rondelle Belleville du diaphragme 7.

Ici l'embrayage est du type poussé, en sorte que le diaphragme 7 est monté de manière pivotante sur le couvercle 8 à l'aide de moyens d'assemblage 20 assujettissant, de manière pivotante, le diaphragme 7 au couvercle 8.

Plus précisément, le couvercle 8, ici métallique, est de forme creuse et présente un fond 83, d'orientation transversale, troué centralement.

Les moyens d'assemblage 20 sont portés par la périphérie interne du fond 83 et comportent un appui primaire 90 et un appui secondaire 89 disposé en regard de l'appui primaire.

L'appui secondaire peut être formé à la faveur de têtes de colonnettes traversant les orifices élargis du diaphragme pour être fixées au fond 83. L'appui primaire peut être formé par un jonc interposé entre le diaphragme et le fond 83. Ce mode de réalisation est visible à la figure 1.

Ici l'appui primaire 90 est formé par emboutissage du fond 83 du couvercle 8 et l'appui secondaire par l'extrémité arrondie en vis-à-vis d'une couronne jonc 89 calée dans des coudes de calage formés à partir de pattes axiales 88 issues par découpe et pliage de la périphérie interne du fond 83 du couvercle creux 8, ici en tôle emboutie.

Le fond 83 est troué centralement. Les pattes axiales 88 traversent les orifices élargis du diaphragme pour porter la couronne jonc 89 en contact par sa périphérie externe arrondie avec la face du diaphragme tournée vers le plateau de pression 6, qui présente frontalement une face de friction pour les garnitures de friction 51 du disque 5 et dorsalement un bossage annulaire 61 fractionné, en secteurs annulaires, pour appui du diaphragme 7.

L'extrémité libre des pattes 88 est repliée radialement vers l'extérieur pour formation des coudes de calage pour la couronne 89.

Le diaphragme 7 est en appui par la périphérie externe de sa rondelle Belleville sur le bossage 61, à extrémité pointue, du plateau 6, et est monté de manière pivotante (ou basculante) par la périphérie interne de sa rondelle Belleville entre les appuis 89,90.

En poussant à l'aide de la butée de débrayage 80 sur l'extrémité interne des doigts du diaphragme 7, on fait pivoter le diaphragme 7 pour désengager l'embrayage. Lors de cette opération, les crochets de rappel 9 ramènent le plateau de pression 6 en direction du fond 83 du couvercle 8 afin de libérer, de manière certaine, les garnitures de friction 51.

Dès que le conducteur relâche la pédale de débrayage 82, la butée 80 revient, sous l'action du diaphragme 7, à sa position initiale d'engagement de l'embrayage.

Pour montage des crochets 9, attelant le diaphragme 7 au plateau 6, le couvercle 8 est doté de trous 84. Ce couvercle présente, outre son fond 83, une jupe périphérique externe 85 de forme cylindrique, d'orientation axiale, prolongeant le fond 83, ladite jupe 85 se raccordant par une zone inclinée 86 à la périphérie externe du fond 83. Les trous 84 sont formés en majeure partie dans la zone 86 dotée de trous de ventilation visibles à la figure 3 et localement de zones embouties 87 pour fixation des languettes élastiques 10 à l'aide des organes de fixation 12, ici des rivets traversant les languettes 10 trouées à cet effet.

A leur autre extrémité les languettes 10 sont fixées au plateau de pression 6 en même temps que des crochets de rappel 9.

Plus précisément, la tête de chaque rivet 12 prend appui sur une semelle 92 du crochet 9 pour serrage de la ou des languettes 10 entre le plateau de pression 6 (la face dorsale de celui-ci) et la semelle 92 trouée pour passage de l'organe 12.

Chaque crochet 9 présente, d'un seul tenant, une patte d'orientation axiale 91 de blocage en rotation du crochet 9 propre à coopérer avec la ou les tranches des languettes tangentielles 10 concernées en étant issues de la semelle 92, d'orientation transversale, prolongée vers l'intérieur par une partie sinueuse 93 pour contourner le diaphragme 7 à sa périphérie externe et présenter, intérieurement, un bourrelet d'appui 94 en regard du bossage 61 (de l'appui) du plateau de pression 6. Le bourrelet 94 prend donc appui sur la face du diaphragme 7 - plus précisément sur la face de la rondelle Belleville de celui-ci - tournée vers le fond 83 du couvercle 8.

Ce crochet 9 est ici métallique et est élastique par sa forme.

Ici le bourrelet d'appui 94 prolonge radialement vers l'intérieur, suivant une caractéristique, une partie arrondie 95 de contournement contournant la partie périphérique externe du diaphragme 7 pour se raccorder à une partie arrondie 96 de raccordement à la semelle 92.

En section la partie de raccordement 96 a une forme semi-circulaire s'étendant globalement sur 180°, tandis que la portion de contournement 95 a également, en section, une forme circulaire s'étendant globalement sur 180°.

Le rayon de la partie de raccordement 96 est supérieur à celui de la partie de contournement 95, qui dépend de l'épaisseur du diaphragme 7. La partie de contournement 95 comporte une portion sommitale surplombant la périphérie externe du diaphragme 7.

La partie sinueuse 93 a donc une longueur radiale plus petite que celle de la figure 1, ce qui rend le crochet 9 plus économique, sachant que ce crochet métallique est traité pour son durcissement et lui donner l'élasticité voulue.

Pour cela, selon l'invention, on cherche à diminuer radialement la distance séparant le sommet de forme pointue du bossage fractionné 61 de l'axe de l'organe de fixation 12, dont la tête prend appui sur la semelle 92 pour serrage de la ou des languettes 10 entre la semelle 92 et le plateau de pression 6 (la face de celui-ci tournée vers le fond 83 du couvercle 8).

Pour ce faire, suivant l'invention, la portion sommitale de la partie de contournement 95 est entaillée pour formation d'un passage 97 pour la tête de l'organe de fixation 12.

Grâce à l'entaille 97, on peut monter axialement l'organe 12, à la faveur du trou 84, à travers l'entaille 97, puis le fixer au plateau de pression 6 et, pour un encombrement radial donné, on peut réduire la distance précitée et donc augmenter le diamètre du bossage 61 et/ou diminuer le diamètre d'implantation des organes de fixation 12.

Il devient donc possible de supprimer les pattes de la figure 1 du plateau de pression 6 et donc de simplifier celui-ci, ainsi que de faciliter l'équilibrage dynamique de celui-ci.

Suivant une caractéristique importante, la partie de contournement 95 est élargie au niveau du passage 97. Ainsi la portion sommitale de la partie 95 de contournement est élargie, ce qui rend résistant le crochet 9 malgré le passage 97. La partie de contournement 95 est donc plus large que la partie de raccordement 96.

Ici la patte 91 s'étend à la périphérie externe de la semelle et coopère avec l'extrémité libre de la ou des languettes 10, sachant qu'une ou plusieurs languettes superposées peuvent intervenir entre le plateau de pression 6 et une zone emboutie 97 (mieux visible à la figure 3). Ici les languettes sont reportées par jeu de une ou plusieurs languettes superposées de manière régulière circonfé-rentiellement.

Leur nombre varie selon les applications.

Ici trois jeux de languettes 10 sont prévus et le rayon de la partie de raccordement 96 est supérieur à celui de la partie de contournement 95, en sorte que la partie de raccordement 96, en liaison avec la périphérie interne de la semelle 92, est plus élastique que la partie de contournement 95, de longueur axiale moindre que celle de la partie de raccordement 96.

Bien entendu, la patte 91, comme dans le document FR-A-2 718 206 et à la figure 1, peut s'étendre latéralement par rapport à la semelle 92 prolongée radialement pour coopérer avec le bord avant de l'ouverture 84 et protéger les languettes 10 en limitant la course du plateau de pression 6 lorsque le mécanisme d'embrayage n'est pas encore monté sur le plateau de réaction 60.

Les pattes 91 permettent, de manière connue, d'immobiliser en rotation les crochets 9 par coopération de formes avec la ou les tranches concernées des languettes 10, tandis que la semelle 92 est une semelle de fixation du crochet 9 au plateau de pression 6, le mécanisme d'embrayage pouvant ne pas comporter des languettes 10, mais une liaison du type tenons-mortaises précitée.

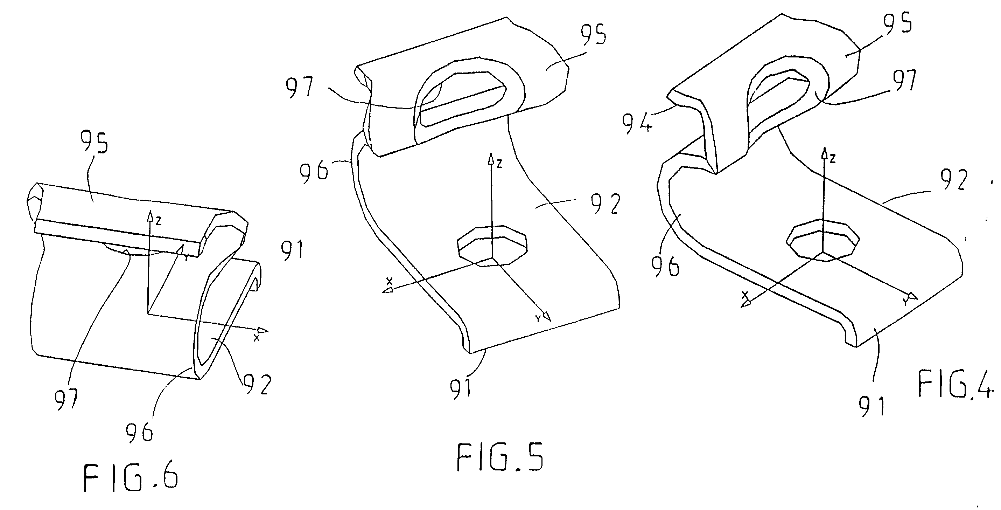

Dans les figures 2 à 6 le bourrelet d'appui 94 du crochet 9 sur le diaphragme 7 forme globalement l'extrémité libre de la partie de contournement 95. La partie sinueuse 93 est donc plus courte.

Chaque crochet 9 s'étend circonférentiellement, par sa partie de raccordement 96, entre deux secteurs annulaires consécutifs du bossage 61 à la faveur de la fente concernée séparant les deux secteurs consécutifs. La partie de raccordement s'étend donc ici dans l'épaisseur du bossage 61. Le passage 97 s'étend au voisinage de la périphérie externe du bossage 61 à sommet de forme pointue pour contact local avec le diaphragme 7.

Grâce à l'invention, on peut implanter les rivets de fixation 12 au niveau de la face de friction qu'offre le plateau de pression à la garniture de friction 51 concernée du disque 5. Le plateau de pression 6 est dépourvu de pattes de fixation des languettes 10 et est moins encombrant radialement. La jupe 85 entoure le plateau 6 et présente, à son extrémité libre, des pattes de fixation 185, formant tenons, engagées chacune dans un passage axial, formant mortaise, formé à la périphérie externe d'un flasque de support 3.

Les pattes 185 et les passages appartiennent aux moyens de fixation 13 précités permettant la fixation du couvercle 8 sur le plateau de réaction 3,4.

Dans les figures 2 à 6 le plateau de réaction 3,4 est en deux parties, à savoir un flasque métallique de support 3 et un plateau de réaction proprement dit, porté par le flasque 3, et offrant une face de friction à la garniture 51 concernée du disque de friction 5. C'est le flasque 3 qui présente centralement des trous pour le passage des organes d'assemblage 11, ici des vis à tête dotées d'une empreinte pour un outil de vissage. Le plateau de réaction 4 est fixé au flasque de support 3 localement par des second organes d'assemblage 111, ici des rivets.

Pour ce faire le flasque 3 est embouti localement pour offrir un appui au plateau de réaction 4 et loger les têtes des rivets 111. Le pied du rivet 111 est logé à la faveur d'un lamage affectant la face de friction du plateau de réaction 4. Les rivets 111 sont implantés radialement en dessous des rivets 12, dont le pied est également logé dans un lamage affectant la face de friction du plateau de pression 6 à sa périphérie externe. Le contact local plateau de réaction 4-flasque 3 permet de ventiler le plateau de réaction 4, le flasque 3 étant pourvu d'ouvertures pour ce faire.

Pour plus de précisions, on se reportera à la figure 2 montrant également les lamages pour les rivets 111, 12.

Une couronne de démarreur 112 est montée à la périphérie externe du flasque 3. La couronne 112 métallique est fixée par soudage au flasque 3.

Les pattes 185 passent sous la couronne 112, ici métallique, pour s'étendre au niveau de la face d'extrémité axiale du flasque 3.

Les pattes 185 sont bloquées en rotation par les passages (non référencés) du flasque 3.

Ici le tronçon d'extrémité libre de chaque patte 186 est soudé au flasque de support 3, ici métallique, les plateaux 4 et 6 étant en fonte.

Un cordon de soudure continu assure la fixation des pattes 185 au flasque 3 et de la couronne 112 au flasque 3.

Pour plus de précisions on se reportera au document FR-95 15 138 du 20.12.1995 considéré comme annexé à la présente description.

Ainsi le couvercle 8 est solidaire du flasque 3, tant en rotation qu'axialement.

Bien entendu, comme décrit dans ce document, l'extrémité libre des pattes peut être rabattue radialement vers l'axe de l'ensemble ou sertie (déformée latéralement au contact du flasque 3). Dans ce cas les pattes 186 sont épaulées.

La réalisation avec soudage est préférable car elle permet de régler la distance entre le flasque 3 et l'appui primaire 90, ce qui permet de régler la distance entre le flasque 3 et l'extrémité interne du doigt du diaphragme 7 servant d'appui à la butée 80 et donc de s'affranchir des tolérances de fabrication.

Quoi qu'il en soit, on voit que la jupe 85, de forme cylindrique, du couvercle 8 entoure le plateau de pression 6 de forme annulaire et grâce aux passages 97 des crochets 9 les garnitures de friction 51 peuvent venir au plus près de la jupe 85.

La formation dans le couvercle 8 des zones embouties 87, par frappe locale, permet de loger la tête des rivets 12 dans la zone 87, ici à section en forme d'équerre, avec une face transversale pour appui de la tête de la vis concernée.

On appréciera que la partie inclinée 86 favorise la formation des zones 87.

Grâce à l'invention et aux zones 87, rien ne dépasse du couvercle 8, ce qui permet de gagner radialement de la place.

On peut en profiter pour rapporter une cible 120 d'allumage par soudage sur la jupe 85. Cette cible présente, en section, une forme de U dont le fond est muni d'ouvertures, un cordon de soudure étant prévu pour fixer par soudage, au couvercle 8, la branche du U la plus éloignée de la couronne 112.

Bien entendu, en variante les passages pour les pattes de fixation 185, d'orientation axiale, peuvent être formés dans le plateau de réaction 4.

Dans tous les cas la couronne de démarreur recouvre les passages et les pattes de fixation 185 associées. Le couvercle 8 est ainsi bloqué en rotation par coopération de formes.

Dans tous les cas, grâce à l'invention, l'embrayage est compact radialement.

Bien entendu l'invention est applicable à un embrayage du type tiré dont la périphérie externe de la rondelle Belleville du diaphragme prend appui sur le couvercle, tandis que la périphérie interne de la rondelle Belleville du diaphragme prend appui sur le plateau de réaction.

Le diaphragme 7 peut présenter des doigts de forme sinueuse comme à la figure 1.

Dans le cas d'un module on peut fixer celui-ci de différentes manières au vilebrequin 1.

Dans les figures 2 et 3 cette fixation est réalisée au moyen de trous pratiqués en coïncidence axiale respectivement dans le diaphragme 7 et le disque de friction 5, respectivement dans les doigts du diaphragme 7 et dans la rondelle de guidage, le voile de moyeu et le palier 130 que comporte ledit disque de friction. Ces trous permettent, à l'aide d'au moins un outil, d'accéder aux têtes des vis 11 pour fixer celles-ci au vilebrequin 2.

Pour plus de précisions -on se reportera au document FR-A-2 710 377, sachant que les vis 11 sont solidaires ici de manière axialement débrayable du disque de friction 5, les têtes des vis 11 étant initialement emmanchées chacune dans un logement prévu à cet effet dans une pièce 130 du disque 5 formant palier par sa partie radialement la plus interne et une rondelle de frottement par sa périphérie radialement la plus externe.

Cette pièce 130 (figure 2) est en contact par l'alésage interne de son palier avec la périphérie externe du moyeu 131 du disque accouplé de manière élastique, par des ressorts, avec intervention de moyens d'engrènement à jeu, à un voile de moyeu accouplé élastiquement, par d'autres ressorts, à deux rondelles de guidage disposées de part et d'autre du voile de moyeu et reliées entre elles par des colonnettes permettant la fixation du disque de support des garnitures de friction 51.

Les logements de la pièce 130 consistent en des douilles en coïncidence axiale avec les trous pratiqués dans le voile de moyeu et l'autre rondelle de guidage, sachant que la pièce 130 forme rondelle de frottement entre le voile de moyeu et la rondelle de guidage à laquelle est accolé le disque support des garnitures 51. Avant montage du module sur le vilebrequin 1 les vis 11 ne dépassent pas du flasque 3, en sorte que les filetages sont protégés.

Un amortisseur de torsion accouple donc les garnitures 51 au moyeu 131.

Dans les figures 2 à 6 le couvercle 8 forme un mécanisme d'embrayage avec le plateau de pression 6, le diaphragme 7 et les crochets de manière précitée.

En variante la partie centrale de l'amortisseur de torsion accouplant les garnitures 51 au moyeu 131 peut ne pas être dotée de trou. Dans ce cas, on assemble d'abord le flasque 3 au vilebrequin 32 à l'aide des vis 11. Ensuite on vient rapporter, à la périphérie externe, un ensemble comprenant le plateau 4, le disque 5, le plateau 6, le diaphragme 7 et le couvercle 8 assemblés au plateau 4 par les pattes 185 de manière précitée ou par des vis.

Dans ce cas, des vis sont portées par le plateau 4 et des trous sont pratiqués en coïncidence axiale dans le fond 83 du couvercle 8, dans la rondelle Belleville du diaphragme 7, le plateau 6 et les garnitures 51.

On peut accéder alors, à l'aide d'au moins un outil, aux têtes des vis pour visser celles-ci dans des trous filetés ménagés à la périphérie externe du plateau 4.

Bien entendu, il ressort à l'évidence de la description et des dessins que le plateau de pression 6, les languettes 10 et les semelles de crochets 9 présentent, en coïncidence axiale, des trous pour passage du fût des rivets 12, les lamages du plateau de pression 6 étant dimensionnées pour logements des pieds sertis des rivets 12.

De même, les languettes 10 et les zones embouties 87 (la partie transversale de celui-ci) présentent des trous en coïncidence axiale pour passage des fûts des rivets 12. On peut fixer les languettes 10 au couvercle à l'aide de rivets 12 ou de boulons et fixer les languettes 10 au plateau de pression à l'aide de vis traversant la semelle 92, les languettes 10, pour venir en prise avec un filetage du plateau de pression 6. Il n'est pas besoin de prévoir de lamages car les vis n'ont pas besoin de traverser le plateau de pression. Toutes les combinaisons sont possibles.

Bien entendu, le flasque 3 et le plateau de réaction 4 présentent, en coïncidence axiale, des trous pour passages des organes de fixation 111 (ici des rivets).

On notera que les vis 11 ont une tête présentant, à leur base, une collerette qui, d'une part, empêche que les vis 11 traversent les douilles de la pièce 130 et, d'autre part, servent à l'appui des vis 11 sur le flasque 3.

Une gorge est prévue centralement au niveau de la zone de raccordement de la collerette avec le fût de la vis 11.

Les éventuelles bavures-présentent, au bord des trous de passage, des vis 11 pouvant venir ainsi se loger dans ladite gorge. Les vis 11 permettent un serrage ferme du flasque 3 entre leur tête et le bout de l'arbre menant 1. La collerette de la vis 11 permet de répartir le serrage sur une plus grande surface et de diminuer les contraintes.

On appréciera que dans les figures 2 à 6 le diaphragme 7 prend appui sur le bossage fractionné 61 au voisinage du bord externe de sa rondelle Belleville et que les organes de fixation 12 sont implantés au niveau de la périphérie externe de la face de friction du plateau de pression 6.

Par rapport au mode de réalisation de la figure 1, pour un même diaphragme 7, on a donc augmenté légèrement le diamètre du bossage 61 et diminuer le diamètre d'implantation des rivets 12.

On transmet ainsi un couple plus important tout en étant moins encombrant radialement au niveau de la jupe 85, ce qui permet ici, compte tenu du gain radial de place obtenu, d'implanter une cible d'allumage 120 avec une distance radiale entre les ouvertures de la cible 120 et la jupe 85, ce qui permet d'obtenir une bonne précision au niveau du capteur associé à la cible.

Les moyens d'assemblage 13 à pattes de fixation 185, d'orientation axiale, pénétrant dans un passage axial formé à la périphérie externe de l'un des éléments plateau 4-flasque 3 permettent, pour un encombrement radial donné, le montage de garnitures de friction 51 de grande taille en combinaison avec l'implantation du bossage 61 sur un diamètre supérieur grâce à l'invention.

L'implantation des crochets 9 dans les fentes séparant deux secteurs annulaires consécutifs permet de donner l'élasticité voulue aux crochets 9 sans augmenter la taille axiale de l'embrayage, tout en ayant des passages 97 dont le fond est très proche de la périphérie externe du bossage 61. Les têtes des organes de fixation 12 sont implantées très proches de la périphérie externe du bossage 61.

En pratique, on laisse subsister un jeu de montage entre le fond du passage 97, la tête des organes 12 et le bossage 61.

## Revendications

1. Mécanisme d'embrayage, notamment pour véhicule automobile, comportant un couvercle (8) propre à être rapporté sur le plateau de réaction (3,4) de l'embrayage, un diaphragme (7) prenant appui sur un appui (90) porté par le couvercle (8) pour action sur un plateau de pression (6) lié en rotation, avec mobilité axiale, au couvercle (8) par des moyens d'attelage (10), des crochets de rappel (9) pour atteler le diaphragme (7) au plateau de pression (6), des organes de fixation (12) pour fixer les crochets (9) au plateau de pression (6), dans lequel les crochets de rappel (9) présentent une semelle (92) pour appui des têtes des organes de fixation (12) des crochets (9) au plateau de pression (6), ladite semelle (92) étant prolongée vers l'intérieur par une partie sinueuse (93) contournant le diaphragme (7) à sa périphérie externe et présentant, pour ce faire, d'une part, une partie de contournement (95) avec une portion sommitale surplombant la périphérie externe du diaphragme (7) et, d'autre part, une partie de raccordement (96) prolongeant la partie de contournement (95) et se raccordant à la semelle (92), caractérisé en ce que la portion sommitale de la partie de contournement (95) est entaillée pour formation d'un passage (97) pour la tête de l'organe de fixation (12) associé.

2. Mécanisme d'embrayage selon la revendication 1, caractérisé en ce que la portion sommitale de la partie de contournement (95) est élargie.

3. Mécanisme d'embrayage selon la revendication 2, caractérisé en ce que ladite portion sommitale est plus large que la portion de raccordement (96).

4. Mécanisme d'embrayage selon la revendication 2 ou 3, caractérisé en ce que la partie de raccordement (96) a, en section, une forme circulaire s'étendant globalement sur 180°.

5. Mécanisme d'embrayage selon la revendication 4, caractérisé en ce que la partie de contournement (95) a globalement, en section, une forme circulaire s'étendant globalement sur 180° et en ce que le rayon de la partie de contournement (95) est inférieur à celui de la partie de raccordement (96).

6. Mécanisme d'embrayage selon la revendication 5, caractérisé en ce qu'un bourrelet d'appui (94), pour appui sur le diaphragme (7) en vis-à-vis d'un bossage d'appui (61) qu'offre le plateau de pression (6) au diaphragme (7), forme globalement l'extrémité libre de la partie de contournement du crochet (9).

7. Mécanisme d'embrayage selon l'une quelconque des revendications 1 à 6, dans lequel le diaphragme (7) prend appui sur un bossage (61) fractionné en secteurs annulaires du plateau de pression (6), caractérisé en ce que chaque crochet (9) s'étend circonférentiellement par sa partie de raccordement (96) entre deux secteurs annulaires consécutifs du bossage (61).

8. Mécanisme d'embrayage selon la revendication 7, caractérisé en ce que le passage (97) s'étend au voisinage de la périphérie externe du bossage (61).

9. Mécanisme d'embrayage selon l'une quelconque des revendications 1 à 8, dans lequel les moyens d'attelage (10) consistent en des jeux de languettes tangentielles (10) fixées à l'une de leurs extrémités au couvercle (8) métallique et à leur autre extrémité au plateau de pression (6) en même temps que les crochets de rappel (9) à l'aide des organes de fixation (12) de ceux-ci, chaque jeu de languettes tangentielles (10) étant monté à serrage entre le plateau de pression (6) et la semelle (92) du crochet (9), caractérisé en ce que le couvercle (8) présente localement des zones embouties (87) pour la fixation des languettes tangentielles et logement des têtes des organes de fixation (12) desdites languettes aux dites zones (87).

10. Module d'embrayage comprenant un flasque (3) de support propre à être fixé par des moyens d'assemblage (11) à un arbre menant (1) et portant un plateau de réaction (4) offrant une face de friction à un disque de friction (5) propre à être lié en rotation à un arbre mené (2) et des moyens de fixation (13) pour fixer un couvercle (8) à l'un des éléments flasque (3) - plateau de réaction (4), caractérisé en ce qu'un mécanisme d'embrayage selon l'une quelconque des revendications 1 à 9 est fixé par l'intermédiaire de son couvercle (8) à l'un des éléments flasque (3) - plateau de réaction (4).

11. Module selon la revendication 10, caractérisé en ce que les moyens de fixation (13) comportent des pattes de fixation (185) issues d'une jupe (85) d'orientation axiale que présente le couvercle (8) à sa périphérie externe et en ce que lesdites pattes (185) pénètrent chacune dans un passage axial formé à la périphérie externe de l'un des éléments flasque de support (3) - plateau de réaction (4).

## Patentansprüche

1. Kupplungsmechanismus, insbesondere für Kraftfahrzeuge, umfassend einen Deckel (8), der an der Gegenanpreßplatte (3, 4) der Kupplung angebracht werden kann, eine Membranfeder (7), die auf einer am Deckel (8) angebrachten Auflage zur Anlage kommt, um auf eine Druckplatte (6) einzuwirken, die drehfest und axial beweglich mit dem Deckel (8) durch Anfügemittel (10) verbunden ist, Rückstellhaken (9), um die Membranfeder (7) an die Druckplatte (6) anzufügen, Befestigungsorgane (12), um die Haken (9) an der Druckplatte (6) zu befestigen, wobei die Rückstellhaken (9) ein Fußstück (92) für die Auflage der Köpfe der Befestigungsorgane (12) zur Befestigung der Haken (9) an der Druckplatte (6) aufweisen, wobei das besagte Fußstück (92) nach innen durch einen gewundenen Teil (93) verlängert wird, der um die Membranfeder (7) an ihrem äußeren Umfang herumgeführt ist und dazu einerseits einen Umführungsteil (95) mit einem über den äußeren Umfang der Membranfeder (7) überstehenden Scheitelabschnitt und andererseits einen Verlängerungsteil (96) aufweist, der den Umführungsteil (95) verlängert und sich an das Fußstück (92) anschließt, **dadurch gekennzeichnet**, daß der Scheitelabschnitt des Umführungsteils (95) eingekerbt ist, um einen Durchgang (97) für den Kopf des zugehörigen Befestigungsorgans (12) zu bilden.

2. Kupplungsmechanismus nach Anspruch 1, **dadurch gekennzeichnet**, daß der Scheitelabschnitt des Umführungsteils (95) verbreitert ist.

3. Kupplungsmechanismus nach Anspruch 2, **dadurch gekennzeichnet**, daß der besagte Scheitelabschnitt breiter als der Anschlußabschnitt (96) ist.

4. Kupplungsmechanismus nach Anspruch 2 oder 3, **dadurch gekennzeichnet**, daß der Anschlußteil (96) im Querschnitt eine Kreisform aufweist, die sich insgesamt auf 180° erstreckt.

5. Kupplungsmechanismus nach Anspruch 4, **dadurch gekennzeichnet**, daß der Umführungsteil (95) im Querschnitt insgesamt eine Kreisform aufweist, die sich insgesamt auf 180° erstreckt, und daß der Radius des Umführungsteils (95) kleiner als der Radius des Anschlußteils (96) ist.

6. Kupplungsmechanismus nach Anspruch 5, **dadurch gekennzeichnet**, daß ein Auflagewulst (94) für die Auflage auf der Membranfeder (7) gegenüber einem Auflagevorsprung (61), den die Druckplatte (6) für die Membranfeder (7) aufweist, insgesamt das freie Ende des Umführungsteils des Hakens (9) bildet.

7. Kupplungsmechanismus nach einem der Ansprüche 1 bis 6, bei dem die Membranfeder (7) auf einem in ringförmige Sektoren unterteilten Vorsprung (61) der Druckplatte (6) zur Auflage kommt, **dadurch gekennzeichnet**, daß sich jeder Haken (9) umfangsmäßig durch seinen Anschlußteil (96) zwischen zwei aufeinander folgenden ringförmigen Sektoren des Vorsprungs (61) erstreckt.

8. Kupplungsmechanismus nach Anspruch 7, **dadurch gekennzeichnet**, daß sich der Durchgang (97) in der Nähe des äußeren Umfangs des Vorsprungs (61) erstreckt.

9. Kupplungsmechanismus nach einem der Ansprüche 1 bis 8, bei dem die Anfügemittel (10) aus Sätzen von tangentialen Zungen (10) bestehen, die an einem ihrer Enden an dem aus Metall ausgeführten Deckel (8) und an ihrem anderen Ende an der Druckplatte (6) zugleich mit den Rückstellhaken (9) mit Hilfe von deren Befestigungsorganen (12) befestigt sind, wobei jeder Satz von tangentialen Zungen (10) eingespannt zwischen der Druckplatte (6) und dem Fußstück (92) des Hakens (9) angebracht ist, **dadurch gekennzeichnet**, daß der Deckel (8) örtlich vertiefte Bereiche (87) für die Befestigung der tangentialen Zungen und die Aufnahme der Köpfe der Befestigungsorgane (12) zur Befestigung der besagten Zungen an den besagten Bereichen (87) aufweist.

10. Kupplungsmodul, umfassend eine Trägerscheibe (3), die durch Verbindungsmittel (11) an einer treibenden Welle (1) befestigt werden kann und eine Gegenanpreßplatte (4) trägt, die eine Reibfläche für eine Reibungskupplungsscheibe (5) aufweist, die drehfest mit einer getriebenen Welle (2) verbunden werden kann, und Befestigungsmittel (13) zur Befestigung eines Deckels (8) an einem der Elemente Trägerscheibe (3) - Gegenanpreßplatte (4), **dadurch gekennzeichnet**, daß ein Kupplungsmechanismus nach einem der Ansprüche 1 bis 9 über seinen Deckel (8) an einem der Elemente Trägerscheibe (3) - Gegenanpreßplatte (4) befestigt ist.

11. Kupplungsmodul nach Anspruch 10, **dadurch gekennzeichnet**, daß die Befestigungsmittel (13) Befestigungsansätze (185) umfassen, die von einer axial ausgerichteten Einfassung (85) ausgehen, die der Deckel (8) an seinem äußeren Umfang aufweist, und daß die besagten Ansätze (185) jeweils in einen axialen Durchgang eindringen, der am äußeren Umfang eines der Elemente Trägerscheibe (3) - Gegenanpreßplatte (4) ausgebildet ist.

## Claims

1. A clutch mechanism, especially for a motor vehicle, comprising a cover plate (8) which is adapted to be attached on the reaction plate (3, 4) of the clutch, a diaphragm (7) bearing on a fulcrum element (90) carried by the cover plate (8) for action on a pressure plate (6) which is coupled in rotation, with axial mobility, to the cover plate (8) by connecting means (10), return hooks (9) for connecting the diaphragm (7) to the pressure plate (6), and fastening members (12) for fixing the hooks (9) to the pressure plate (6), in which the return hooks (9) have a foot portion (92) for engagement by the heads of the members (12) that fasten the hooks (9) to the pressure plate (6), the said foot portion (92) being extended inwardly by a sinuous portion (93) bridging the diaphragm (7) at its outer periphery and having for this purpose, firstly a bridging portion (95) with a summit zone in line with the outer periphery of the diaphragm (7), and secondly, a junction portion (96) extending the bridging portion (95) and joined to the foot portion (92), characterised in that the summit zone of the bridging portion (95) is notched so as to define a passage (97) for the head of the associated fastening member (12).

2. A clutch mechanism according to Claim 1, characterised in that the summit zone of the bridging portion (95) is widened.

3. A clutch mechanism according to Claim 2, characterised in that the said summit zone is wider than the junction portion (96).

4. A clutch mechanism according to Claim 2 or Claim 3, characterised in that the junction portion (96) has in cross-section a circular form extending generally over 180°.

5. A clutch mechanism according to Claim 4, characterised in that the bridging portion (95) has a generally circular cross-section extending generally over 180°, and in that the radius of the bridging portion (95) is smaller than that of the junction portion (96).

6. A clutch mechanism according to Claim 5, characterised in that an abutment lip (94), for engagement on the diaphragm (7) in facing relationship with a thrust boss (61) offered by the pressure plate (6) to the diaphragm (7), generally defines the free end of the bridging portion of the hook (9).

7. A clutch mechanism according to any one of Claims 1 to 6, in which the diaphragm (7) bears on a boss (61), which is divided into annular sectors, of the pressure plate (6), characterised in that each hook (9) extends circumferentially, by means of its junction portion (96), between two consecutive annular sectors of the boss (61).

8. A clutch mechanism according to Claim 7, characterised in that the passage (97) is in the vicinity of the outer periphery of the boss (61).

9. A clutch mechanism according to any one of Claims 1 to 8, in which the connecting means (10) consist of sets of tangential tongues (10) which are fixed at one of their ends to the metallic cover plate (8), and at their other end to the pressure plate (6), at the same time as the return hooks (9) are secured to the latter by means of the fastening members (12), each set of tangential tongues (10) being clamped between the pressure plate (6) and the foot portion (92) of the hook (9), characterised in that the cover plate (8) has locally pressed-out zones (87) for fastening the tangential tongues and for accommodating the heads of the members (12) by which the said tongues are fastened to the said zones (87).

10. A clutch module comprising a radial support plate (3) adapted to be fixed by assembly means (11) to a driving shaft (1) and carrying a reaction plate (4), which offers a friction surface to a clutch friction wheel (5) adapted to be coupled in rotation to a driven shaft (2), and fastening means (13) for securing a cover plate (8) to one of the elements consisting of the radial plate (3) and reaction plate (4), characterised in that a clutch mechanism according to any one of Claims 1 to 9 is fixed by means of its cover plate (8) to one of the elements consisting of the radial plate (3) and reaction plate (4).

11. A module according to Claim 10, characterised in that the fastening means (13) comprise fastening lugs (185) projecting from an axially orientated skirt portion (85) of the cover plate (8) at the outer periphery of the latter, and in that each of the said lugs (185) penetrates into an axial passage formed at the outer periphery of one of the elements consisting of the radial support plate (3) and reaction plate (4).
